# EUROPÄISCHE PATENTANMELDUNG

(11) **EP 1 351 050 A2**
(43) Veröffentlichungstag der Anmeldung: **08.10.2003**
(21) Anmeldenummer: 03006512.2
(22) Anmeldetag: 22.03.2003
(51) Int. Cl.: G01N 22/04, G01R 27/26

(54) **Vorrichtung zur Ermittlung der Materialfeuchte eines Mediums**

(30) Priorität: 05.04.2002 DE 20205302 U
(71) Anmelder: imko Intelligente Micromodule Köhler GmbH, 76275 Ettlingen (DE)
(72) Erfinder: Köhler, Kurt, 76275 Ettlingen (DE)
(74) Vertreter: Dimmerling, Heinz, Dipl.-Ing.

(57) **Zusammenfassung**

Eine Vorrichtung zur Ermittlung der Materialfeuchte eines Mediums, welches das Dielektrikum einer als Sonde ausgebildeten Meßleitung bildet, weist eine Auswerteelektronik 3 auf. Die Auswerteelektronik 3 hat einen Signalgeber, der ein pulsförmiges Signal in das eine Ende der Meßleitung einspeist, einen Empfänger, der an demselben Ende das am anderen Ende der Meßleitung reflektierte Signal empfängt, sowie eine Einrichtung zum Messen der Zeit, die zwischen dem Beginn des Einspeisens des Signals und dem Eintreffen des reflektierten Signals verstreicht. Die Vorrichtung ist dadurch gekennzeichnet, daß die Auswerteelektronik 3 eine Einrichtung zur Temperaturkompensation hat und unmittelbar an dem einen Ende der Meßleitung 2a, 2b angeordnet ist.

## Beschreibung

Die Erfindung betrifft eine Vorrichtung nach dem Oberbegriff des Anspruchs 1 zur Ermittlung der Materialfeuchte eines Mediums, welches das Dielektrikum einer als Sonde ausgebildeten Meßleitung bildet, welche Vorrichtung eine Auswerteelektronik aufweist, mit einem Signalgeber, der ein pulsförmiges Signal in das eine Ende der Meßleitung einspeist, und einem Empfänger, der an demselben Ende das am deren Ende der Meßleitung reflektierte Signal empfängt, sowie einer Einrichtung zum Messen der Zeit, die zwischen dem Beginn des Einspeisens des Signals und dem Eintreffen des reflektierten Signals verstreicht.

Eine derartige Vorrichtung ist beispielsweise aus der EP 0 478 851 B1 bekannt und wird von der Patentinhaberin mit großem Erfolg vermarktet. Wesentliches Element der bekannten Vorrichtung ist die Meßleitung.

Die Meßleitung kann unterschiedlich ausgebildet sein. So kann die Meßleitung aus parallelen Stäben bestehen oder als Sonde ausgebildet sein, wie dies beispielsweise der DE 43 34 649 C2 entnommen werden kann.

Die in der DE 43 34 649 C2 beschriebenen Sonden besitzen einen zylinderförmigen Körper, auf welchem die Meßleitung angeordnet ist. Der Körper der Sonden kann je nach Anforderung auch eine andere Gestalt haben. So kann der Körper dreieckig, viereckig, sechseckig oder auch oval sein. Des weiteren kann der Körper innen hohl sein. Zu beachten ist jedoch, daß sich im Bereich der Oberfläche in einem Abstand verlaufende elektrische Leiter befinden, die die Meßleitung bilden.

Bei der bekannten Vorrichtung ist die Sonde mit der Auswerteelektronik über ein Koaxialkabel verbunden. Durch die Verwendung eines Koaxialkabels als Verbindungsleitung läßt sich der durch die Verbindungsleitung hervorgerufene Fehler relativ klein halten. Jedoch ist es wünschenswert, die Genauigkeit der Vorrichtung zu erhöhen.

Es ist Aufgabe der Erfindung, eine eingangs genannte Vorrichtung derart auszubilden, daß sie eine höhere Genauigkeit hat.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist eine Vorrichtung zur Ermittlung der Materialfeuchte eines Mediums, welches das Dielektrikum einer als Sonde ausgebildeten Meßleitung bildet, welche Vorrichtung eine Auswerteelektronik aufweist, mit einem Signalgeber, der ein pulsförmiges Signal in das eine Ende der Meßleitung einspeist, und einem Empfänger, der an demselben Ende das am anderen Ende der Meßleitung reflektierte Signal empfängt, sowie eine Einrichtung zum Messen der Zeit, die zwischen dem Beginn des Einspeisens des Signals und dem Eintreffen des reflektierten Signals verstreicht, dadurch gekennzeichnet, daß die Auswerteelektronik eine Einrichtung zur Temperaturkompensation hat und unmittelbar an dem einen Ende der Meßleitung angeordnet ist.

Dadurch, daß die Auswerteelektronik eine Einrichtung zur Temperaturkompensation hat und unmittelbar an dem einen Ende der Meßleitung angeordnet ist, wird in vorteilhafter Weise erreicht, daß die Genauigkeit der Vorrichtung größer ist. Obwohl die Vornahme einer Temperaturkompensation beziehungsweise die Anordnung der Auswerteelektronik unmittelbar an dem einen Ende der Meßleitung jeweils nur sehr geringe Verbesserungen der Genauigkeit gebracht haben, hat sich in überraschender Weise gezeigt, daß eine Kombination der Temperaturkompensation mit der Anordnung der Auswerteelektronik unmittelbar an dem einen Ende der Meßleitung zu einer deutlichen Verbesserung der Genauigkeit der Vorrichtung führt. Der bei der bekannten Vorrichtung vorhandene systematische Fehler konnte durch diese Maßnahme nahezu auf Null reduziert werden.

Als besonders vorteilhaft hat sich eine Ausführungsform der Erfindung herausgestellt, bei der die Auswerteelektronik innerhalb des Sondengehäuses angeordnet ist. Durch die Anordnung der Auswerteelektronik im Inneren des Sondengehäuses wird nicht nur erreicht, daß die Auswerteelektronik unmittelbar an dem einen Ende der Meßleitung angeordnet sein kann, sondern darüber hinaus noch, daß die Vorrichtung sehr kompakt und sehr robust ausgebildet ist. Des weiteren ist die Handhabung der Vorrichtung hierdurch wesentlich einfacher.

Insbesondere ist es hierbei sehr vorteilhaft, daß die Temperaturkompensation ebenfalls im Sondengehäuse angeordnet ist. Hierdurch kann der Temperaturgang der Meßleitung gleichzeitig mit dem Temperaturgang der Auswerteelektronik kompensiert werden.

Sehr vorteilhaft ist es, wenn die Einrichtung zur Temperaturkompensation einen Speicher aufweist, in dem ein erster Referenzmeßwert einer vorbestimmten Materialfeuchte bei einer ersten Temperatur der Vorrichtung beziehungsweise der Auswerteelektronik und ein zweiter Referenzmeßwert der vorbestimmten Materialfeuchte bei einer zweiten Temperatur der Vorrichtung beziehungsweise der Auswerteelektronik gespeichert ist. In besonders vorteilhafter Weise werden die Referenzmeßwerte individuell für jede hergestellte Vorrichtung ermittelt. Durch die Referenzmeßwerte läßt sich auf einfache Weise die Veränderung eines Meßwerts über die Temperatur zwischen der ersten Temperatur und der zweiten Temperatur durch Interpolation bestimmen. Wird im späteren Betrieb ein bei einer Messung erfaßter Feuchtigkeitswert mittels der so ermittelten temperaturabhängigen Änderung korrigiert, erhält man einen höchst genauen Meßwert.

Als sehr vorteilhaft hat sich auch eine Ausführungsform der Erfindung herausgestellt, bei der die Meßleitung an der Oberfläche des Sondengehäuses angeordnet ist und die Oberfläche in diesem Bereich ein mit Gel gefülltes Kissen aufweist. Hierdurch läßt sich die Meßleitung sehr gut auf ein zu messendes Medium aufsetzen. Durch das mit Gel gefüllte Kissen wird des weiteren erreicht, daß die Sonde in sehr schonender Weise auf die Oberfläche des Mediums aufgesetzt werden kann.

Bei einer weiteren besonderen Ausführungsform der Erfindung ist vorgesehen, daß die Stromversorgung mittels eines im Sondengehäuse angeordneten Energiespeichers geschieht. Hierdurch wird die Handhabbarkeit der Vorrichtung nochmals erheblich verbessert.

Als sehr vorteilhaft hat sich weiterhin eine besondere Ausführungsform der Erfindung herausgestellt, bei der das Sondengehäuse eine Anzeige aufweist. Durch die Anzeige im Sondengehäuse läßt sich die Vorrichtung sehr komfortabel benutzen.

Sehr vorteilhaft ist auch eine Ausführungsform der Erfindung, bei der das Sondengehäuse einen Handgriff aufweist, welcher einen Taster aufweist, zum Starten eines Meßvorgangs. Hierdurch ist in vorteilhafter Weise ein "Ein-Hand-Betrieb" der Vorrichtung möglich.

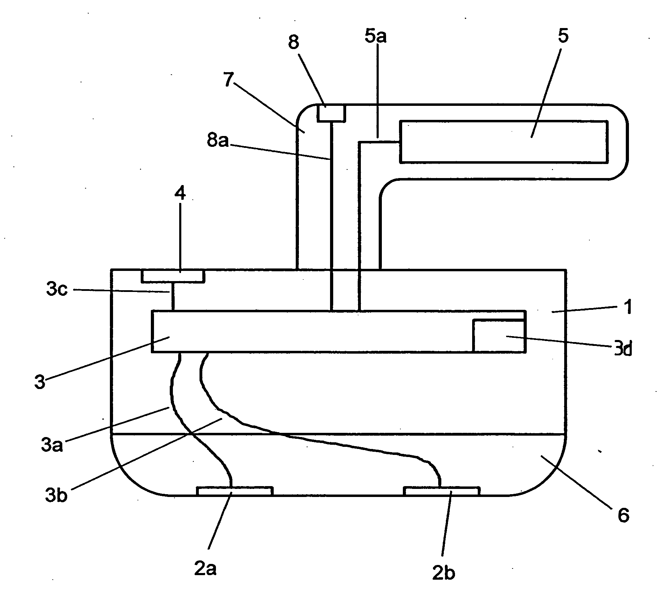

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur eine schematischen Anordnung einer erfindungsgemäßen Vorrichtung.

Wie der Zeichnung entnommen werden kann, weist eine Sonde ein zylinderförmiges Gehäuse 1 auf, an welchem an einer Stirnseite ein mit Gel gefülltes Kissen 6 angeordnet ist. An der gegenüberliegenden Stirnseite ist an dem Sondengehäuse 1 ein klinkenförmiger Handgriff 7 angeordnet.

In dem mit Gel gefüllten Kissen 6 sind zwei in einem Abstand parallel verlaufende elektrische Leiter 2a, 2b angeordnet, die die Meßleitung 2a, 2b bilden. Die elektrischen Leiter 2a, 2b sind an einem Ende mittels Anschlußdrähte 3a, 3b mit einer Auswerteelektronik 3 verbunden. Die Anschlußleitungen 3a, 3b sind in dem Gehäuse 1 fixiert, so daß sich ihre Lage nicht verändert.

Der Handgriff 7 weist einen Taster 8 auf, welcher über eine Verbindungsleitung 8a mit der Auswerteelektronik 3 verbunden ist. Mittels des Tasters 8 läßt sich ein Meßvorgang der Vorrichtung einleiten.

Das Sondengehäuse 1 weist des weiteren eine Anzeige 4 auf, welche mittels einer Verbindungsleitung 3c mit der Auswerteelektronik 3 verbunden ist. Die Auswerteelektronik 3 ist des weiteren über eine Energieversorgungsleitung 5a mit einem ebenfalls im Sondengehäuse 1 angeordneten Energiespeicher 5 verbunden. Der Energiespeicher 5 kann als wiederaufladbarer Akkumulator ausgebildet sein.

Die Auswerteelektronik 3 weist einen Signalgeber auf, der ein pulsförmiges Signal in das eine Ende der Meßleitung 2a, 2b einspeist, und einen Empfänger auf, der an demselben Ende das am anderen Ende der Meßleitung reflektierte Signal empfängt. Des weiteren weist die Auswerteelektronik 3 eine Einrichtung zum Messen der Zeit auf, die zwischen dem Beginn des Einspeisens des Signals und dem Eintreffen des reflektierenden Signals verstreicht. Darüber hinaus weist die Auswerteelektronik eine Temperaturkompensation auf.

Die Auswerteelektronik 3 weist des weiteren einen Speicher 3d auf, in dem ein erster Referenzmeßwert einer vorbestimmten Materialfeuchte bei einer ersten Temperatur der Vorrichtung und ein zweiter Referenzmeßwert der vorbestimmten Materialfeuchte bei einer zweiten Temperatur der Vorrichtung gespeichert ist. Zur Bestimmung des ersten Referenzmeßwertes wird die Vorrichtung oder zumindest die Auswerteelektronik 3 auf eine Temperatur von beispielsweise 23 Grad Celsius gebracht und mit der Vorrichtung die Feuchte eines Mediums mit einer bestimmten Materialfeuchte gemessen. Danach wird die Temperatur der Vorrichtung beziehungsweise der Auswerteelektronik 3 auf beispielsweise 53 Grad Celsius gebracht und die Materialfeuchte desselben Mediums mit derselben Materialfeuchte bestimmt. Die so bestimmten Referenzmeßwerte werden in den Speicher 3d gespeichert.

Durch einen Vergleich der beiden Referenzmeßwerte erhält man den Temperaturgang der Vorrichtung beziehungsweise der Auswerteelektronik 3. Durch lineare Interpolation kann die Änderung des Meßwerts über die Temperatur zwischen der zweiten Temperatur und der ersten Temperatur bestimmt werden. Wird beispielsweise im Betrieb der Vorrichtung eine Messung bei einer Temperatur der Vorrichtung von etwa 38 Grad Celsius durchgeführt, wird der gemessene Feuchtigkeitswert um die Hälfte der Differenz der beiden Referenzmeßwerte korrigiert. Hierdurch läßt sich der Temperaturgang der Vorrichtung nahezu vollständig kompensieren.

Dadurch, daß die Auswerteelektronik innerhalb des Sondengehäuses 1 angeordnet ist und über die Verbindungsleitungen 3a, 3b unmittelbar mit dem einen Ende der Meßleitung 2a, 2b verbunden ist, sowie eine Temperaturkompensation aufweist, ist die Genauigkeit der Vorrichtung sehr hoch.

## Patentansprüche

1. Vorrichtung zur Ermittlung der Materialfeuchte eines Mediums, welches das Dielektrikum einer als Sonde (1) ausgebildeten Meßleitung (2a, 2b) bildet, welche Vorrichtung eine Auswerteelektronik (3) aufweist, mit einem Signalgeber, der ein pulsförmiges Signal in das eine Ende der Meßleitung (2a, 2b) einspeist, und einem Empfänger, der an demselben Ende das am anderen Ende der Meßleitung (2a, 2b) reflektierte Signal empfängt, sowie einer Einrichtung zum Messen der Zeit, die zwischen dem Beginn des Einspeisens des Signals und dem Eintreffen des reflektierten Signals verstreicht,
**dadurch gekennzeichnet,**
**daß** die Auswerteelektronik (3) eine Einrichtung zur Temperaturkompensation hat und unmittelbar an dem einen Ende der Meßleitung (2a, 2b) angeordnet ist.

2. Vorrichtung nach Anspruch 1,
**dadurch gekennzeichnet,**
**daß** die Auswerteelektronik (3) innerhalb des Sondengehäuses (1) angeordnet ist.

3. Vorrichtung nach Anspruch 1 oder 2,
**dadurch gekennzeichnet,**
**daß** die Einrichtung zur Temperaturkompensation einen Speicher (3d) aufweist, in dem ein erster Referenzwert einer vorbestimmten Materialfeuchte bei einer ersten Temperatur der Auswerteelektronik (3) und einem Referenzmeßwert der vorbestimmten Materialfeuchte bei einer zweiten Temperatur der Auswerteelektronik (3) gespeichert sind.

4. Vorrichtung nach Anspruch 1 bis 3,
**dadurch gekennzeichnet,**
**daß** das Sondengehäuse (1) eine Anzeige (4) aufweist.

5. Vorrichtung nach einem der Ansprüche 1 bis 4,
**dadurch gekennzeichnet,**
**daß** die Meßleitung (2a, 2b) an der Oberfläche des Sondengehäuses (1) angeordnet ist und die Oberfläche im Bereich der Meßleitung (2a, 2b) ein mit Gel gefülltes Kissen (6) aufweist.

6. Vorrichtung nach einem der Ansprüche 1 bis 5,
**dadurch gekennzeichnet,**
**daß** die Stromversorgung mittels eines im Sondengehäuse (1) angeordneten Energiespeichers (5) geschieht.

7. Vorrichtung nach einem der Ansprüche 1 bis 6,
**dadurch gekennzeichnet,**
**daß** das Sondengehäuse (1) einen Handgriff (7) hat, in welchem ein Taster (8) zum Starten eines Meßvorgangs angeordnet ist.
